# EUROPÄISCHE PATENTSCHRIFT

(11) **EP 1 900 413 B1**
(45) Veröffentlichungstag und Bekanntmachung des Hinweises auf die Patenterteilung: **10.11.2010**
(21) Anmeldenummer: 07116181.4
(22) Anmeldetag: 12.09.2007
(51) Int. Cl.: B01D 46/10, B01D 46/52, B01D 46/00

(54) **Filter- oder Adsorberelement mit eingeschlossenen Adsorptionspartikeln und ein Verfahren zu dessen Herstellung**
Filter or absorption element with enclosed absorption particles and a method for its manufacture
Elément d'absorption ou de filtre doté de particules d'absorption enfermées et son procédé de fabrication

(30) Priorität: 13.09.2006 DE 102006043729
(43) Veröffentlichungstag der Anmeldung: 19.03.2008
(73) Patentinhaber: MANN+HUMMEL GmbH, 71638 Ludwigsburg (DE)
(72) Erfinder: Tumbrink, Manfred, 64732 Bad König (DE); Huber, Matthäus, 94419 Reisbach (DE); Süß, Reinhard, 84163 Marklkofen (DE)

(56) Entgegenhaltungen:
- DE-A1- 10 049 537
- DE-A1- 10 249 577
- DE-A1- 19 844 874
- US-B1- 7 070 641

## Beschreibung

### Stand der Technik

Die Erfindung betrifft ein Filter- und Adsorberelement, insbesondere für die Reinigung von Luft in Kraftfahrzeugen, nach der Gattung des Hauptanspruchs.

Es ist beispielsweise aus der EP 0759319 A ein Filterelement bekannt, bei dem das Filtermedium eine durchgehende Zick-Zack-Faltung aufweist und aus einem Bahnenmaterial hergestellt ist, das mit einem seitlichen Abschluss versehen ist. Bei diesem bekannten Filterelement werden bereits bei der Herstellung des Endlosbandes mit den gefalteten Filterbahnen ein ebenfalls endloser Dichtungsstreifen als Rahmenteil seitlich angefügt. Nach dem Zuschnitt der erforderlichen Länge der Filterbahnen werden stirnseitig U-Profilleisten derart an die seitlichen Dichtungsstreifen angefügt, dass aus den U-Profilen und den seitlichen Dichtstreifen ein steifer Rahmen für den Filtereinsatz und damit das Filterelement gebildet ist.

Weiterhin ist aus der DE 202005011726 U bekannt, dass ein Filtereinsatz mit durchgehender Zick-Zack-Faltung für ein Filterelement als sogenanntes Kombinationsfilter, insbesondere als Filter- und Adsorberelement, aufgebaut ist, bei dem Partikel mit guten Adsorptionseigenschaften, wie zum Beispiel Aktivkohle, zwischen zwei Lagen von Filterbahnen eingefasst sind. Hier werden an den Stirnseiten des Filtermediums, also bei den jeweiligen Endfaltungen mittels der Verklebung dieser Endfaltungen an einem Profilelement als Rahmen durch den Kleber die Filterbahnen und die eingefassten Partikeln mit versiegelt, so dass hier durch diese Versiegelung verhindert wird, dass die Partikel aus den Lagen der Filterbahnen herausrieseln.
Aus der US 7 070 641 B1 ist ein Aktivkohle-Filterelement mit einem Rahmen und einer Dichtung bekannt, die in einem Stützrahmen gehalten sind. Das Filterelement wird durch die Verwendung eines flüssigen Wachses an den Rändern abgedichtet.
In den Schriften DE 198 44 874 A1 und DE102 49 577 A1 wird ein Versiegeln von Schnittkanten mit Hilfe von Klebern oder thermischen Verfahren wie Ultraschall, Abdecken der Schnittkanten mit Vliesstoffen beschrieben.

### Darstellung der Erfindung

Die Erfindung betrifft ein Filter- und Adsorberelement der eingangs genannten Art mit mindestens zwei Lagen von Filterbahnen und einer von den Lagen der Filterbahnen weitgehend eingefassten Schicht aus adsorptiven Partikeln. Die seitlichen offenen Ränder der Filterbahnen mit den eingefassten adsorptiven Partikeln mit einer dichtenden Masse versiegelt sind. Bevorzugt sind hierbei die Lagen der Filterbahnen zick-zack-förmig gefaltet.

Die adsorptiven Partikel können beispielsweise aus Aktivkohlepartikel gebildet sein, es sind hier aber auch andere saugfähige Materialien einsetzbar. Beispielsweise sind auch lonentauscher, insbesondere lonentauscherharze oder vergleichbare Materialien hier einsetzbar.

Die dichtende Masse ist ein durch Hitze verflüssigbares und durch Auskühlung härtbares Wachs

Bei einem erfindungsgemäßen Verfahren zur Herstellung des vorhergehend beschriebenen Filterelements werden die zick-zack-förmig gefalteten und in den erforderlichen Abmessungen geschnittenen Lagen von Filterbahnen mit der eingefassten Schicht aus adsorptiven Partikeln in einer Vorrichtung gehalten, die einen Auftragskopf zur Auf- oder Einbringung der weichen Masse aufweist. Nach dem Auf- oder Einbringung der weichen Masse wird in vorteilhafter Weise in einer Kunststoffspritzgussvorrichtung das Rahmenteil seitlich aufgespritzt.

Mit dem Auftragskopf kann beispielsweise über eine Düse erhitztes Wachs auf die seitlichen Randbereiche der Lagen dosiert aufgespritzt werden oder es ist alternativ möglich, dass die seitlichen Randbereiche der Filterbahnen mit erhitztem Wachs dadurch versehen werden, dass eine Schöpfkelle als Auftragskopf die seitlichen Randbereiche des Filtermediums mit erhitztem Wachs benetzt.

Diese erfindungsgemäße Vorkonfektionierung des Filtermediums zur Herstellung eines Filterelements mit beispielsweise Aktivkohlemedien erfolgt in der Regel im Anschluss an eine sogenannte Messerfaltanlage zur Herstellung der Zick-Zack-Faltung und nach einem Trennschnitt. Das Versie - geln der somit entstandenen Schnittkante kann dann durch Auftragen der zunächst weichen dichtenden Masse mittels des Auftragskopfes, zum Beispiel einer Leimdüse, erfolgen, wobei die Auftragsmenge über die Düse des Auftragskopfes geregelt wird und die Eindringtiefe des Wachses über die Auftragsmenge gesteuert wird.

Bei der alternativen Möglichkeit mittels der Schöpfkelle wird das Wachs quasi mit einem Tauchverfahrens aufgebracht. Hierzu werden die Endfalten der zu versiegelnden Filterbahnen in der Vorrichtung zur Versiegelung fixiert und anschließend fährt die Schöpfkelle hoch und benetzt die Kanten der Filterbahnen.

Mit der Erfindung können auf einfache Weise eine Reihe von Schwierigkeiten insbesondere bei der Kunststoffumspritzung zur Herstellung der Rahmenteile für das Filterelement in ihrer Auswirkung gemindert werden. Bei der Herstellung von Filterelementen der zuvor beschriebenen Art, die auch als Kombifilter in plissierter Form bezeichnet werden, entstehen Probleme dadurch, dass bei der Einspritzung in einen Kunststoffrahmen beim Schließen der Spritzgussform eventuell das Filtermedium (Filterbahnen und eingeschlossene Partikel) zerstört wird bzw. die Partikel (Aktivkohle oder vergleichbares Material) gebrochen werden. Hierbei entsteht Staub, der aus dem Filtermedium herausfällt. Gestaltet man andererseits den Dichtspalt in der Spritzgießform zu offen, dringt der eingespritzte Kunststoff zu weit in das Filtermedium ein und es erfolgt ein sogenanntes Überspritzen.

Um dieses zu verhindern werden die erfindungsgemäßen Versiegelungen vorgeschlagen, bei der die Schnittkanten vor dem Einbringen in die Spritzgießform versiegelt werden. Hierdurch wird der Randbereich des plissierten Filtermediums weitgehend verschlossen und die Spritzgießform kann ohne negative Auswirkungen geschlossen werden, wobei die weiche Masse ausweichen kann, ohne dass die Partikel zerstört werden. Beim Einspritzvorgang wird dann ein Überspritzen weitgehend verhindert.

### Kurze Beschreibung der Figuren der Zeichnungen

Ein Ausführungsbeispiel der Erfindung wird anhand der Zeichnungen erläutert. Es zeigen:

Figur 1 einen Schnitt durch ein Filtermedium, bestehend aus zwei zick-zack-förmig gefalteten Filterbahnen und eingeschlossenen adsorptiven Partikeln und

Figur 2 eine schematische Darstellung eines Filterelements mit versiegelten seitlichen Rändern des Filtermediums.

### Weg(e) zur Ausführung der Erfindung

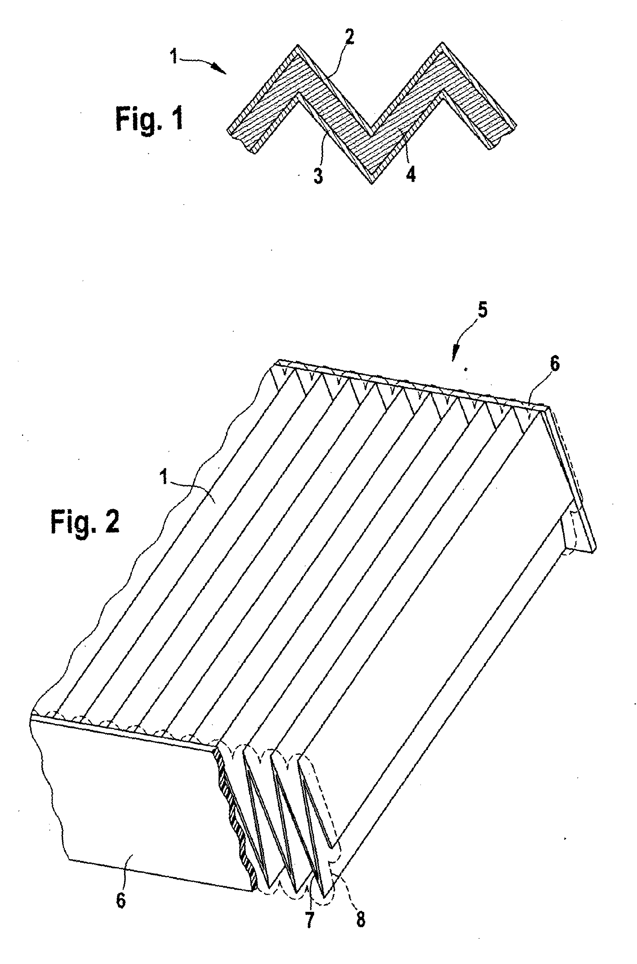

In Figur 1 ist ein Schnitt durch ein Filtermedium 1gezeigt, das beispielsweise in einem Luftfilter für den Ansaugtrakt eines Verbrennungsmotors oder für einen Fahrzeugkabinen-Innenraumluftfilter angewendet werden kann. Es sind Lagen von zick-zack-förmig gefalteten Filterbahnen 2 und 3 vorhanden, zwischen den eine Schicht aus adsorptiven Partikeln 4, hier Aktivkohle, eingefasst ist.

Aus Figur 2 ist ein Filterelement 5 zu entnehmen, bei dem hier im seitlichen Randbereich ein Rahmenteil 6 vorhanden ist, welches das Filtermedium 1 an seitlichen Rändern 7 des Filtermediums 1 mechanisch festhält.

An den seitlichen Rändern 7 des Filtermediums 1 ist eine hier gestrichelt angedeutete dichtende Masse 8 angebracht, die hier beispielsweise ein durch Hitze verflüssigbares und durch Auskühlung härtbares Wachs ist. Es sind aber auch die in den vorangehenden Beschreibungsteilen erwähnten Materialien und Verfahren einsetzbar.

In einer hier nicht dargestellten Vorrichtung zur Herstellung des Filterelements 5 werden das zick-zack-förmig gefaltete und in den erforderlichen Abmessungen geschnittene Filtermedium 1gehalten und dann mit einem entsprechend gestalteten Auftragskopf als Leimdüse oder Schöpfkelle die zunächst weiche dichtende Masse 8 aufgetragen, die in einer geringen Tiefe in das Filtermedium 1 eindringt. Nach dem Auf- oder Einbringung der Masse 8 wird dann in einer Kunststoffspritzgussvorrichtung das Rahmenteil 6 seitlich aufgespritzt.

## Patentansprüche

1. Filter- und Adsorberelement (5), bestehend aus einem Filtermedium (1) mit mindestens zwei Lagen von Filterbahnen (2,3) und einer von den Filterbahnen (2,3) weitgehend eingefassten Schicht aus adsorptiven Partikeln (4), wobei die seitlichen offenen Ränder (7) des Filtermediums (1) mit den eingefassten adsorptiven Partikeln (4) mit einer dichtenden Masse (8) versiegelt sind, wobei die dichtende Masse (8) ein durch Hitze verflüssigbares und durch Auskühlung härtbares Wachs ist, und wobei zumindest an den seitlichen Rändern ein festes Rahmenteil (6) angefügt ist, wobei das feste Rahmenteil (6) ein Kunststoffspritzgussteil ist.

2. Filter- und Adsorberelement nach Anspruch ,1 bestehend aus mindestens zwei zick-zack-förmig gefalteten Lagen von Filterbahnen (2,3).

3. Filter- und Adsorberelement nach einem der vorhergehenden Ansprüche, **dadurch gekennzeichnet, dass** die adsorptiven Partikel (4) aus Aktivkohlepartikel gebildet sind.

4. Filter- und Adsorberelement nach einem der vorhergehenden Ansprüche, **dadurch gekennzeichnet, dass** die adsorptiven Partikel (4) aus lonentauschern, insbesondere aus lonentauscherharzen gebildet sind.

5. Verfahren zur Herstellung eines Filter- und Adsorberelements nach einem der Ansprüche 2 bis 4, **dadurch gekennzeichnet, dass** die zick-zack-förmig gefalteten und in den erforderlichen Abmessungen geschnittenen Lagen von Filterbahnen (2,3) mit der eingefassten Schicht aus adsorptiven Partikeln (4) in einer Vorrichtung gehalten wird, die einen Auftragskopf zur Auf- oder Einbringung des erhitzten Wachses aufweist und dass nach dem Auf- oder Einbringung des erhitzten Wachses in einer Kunststoffspritzgussvorrichtung das Rahmenteil (6) seitlich aufgespritzt wird.

6. Verfahren nach Anspruch 5, **dadurch gekennzeichnet, dass** die seitlichen Ränder (7) des Filtermediums (1) mit erhitztem Wachs **dadurch** versehen werden, dass eine Schöpfkelle als Auftragskopf die seitlichen Ränder (7) des Filtermediums (1) mit erhitztem Wachs benetzt.

## Claims

1. Filter and adsorber element (5), consisting of a filter medium (1) with at least two layers of filter belts (2, 3) and of a layer of adsorptive particles (4) which is to a large extent surrounded by the filter belts (2, 3), the laterally open edges (7) of the filter medium (1) with the surrounded adsorptive particles (4) being sealed by a sealing compound (8), the sealing compound (8) being a wax that can be liquefied by heat and cured by cooling down, and at least at the lateral edges a fixed frame part (6) being attached, the fixed frame part (6) being a plastic injection molded part.

2. Filter and adsorber element according to claim 1, consisting of at least two fanfold layers of filter belts (2, 3).

3. Filter and adsorber element according to one of the above claims, **characterized in that** the adsorptive particles (4) are made of activated carbon particles.

4. Filter and adsorber element according to one of the above claims, **characterized in that** the adsorptive particles (4) are made of ion exchangers, in particular of ionexchange resins.

5. Method for manufacturing a filter and adsorber element according to one of the claims 2 to 4, **characterized in that** the fanfold filter belts (2, 3) with the surrounded layer of adsorptive particles (4) and cut into layers of the required dimensions are held in a device which features an application head for applying or introducing the heated wax, and that after having applied or introduced the heated wax the frame part (6) is laterally injected in a plastic injection molding device.

6. Method according to claim 5, **characterized in that** the lateral edges (7) of the filter medium (1) are provided with heated wax in a such a way that a ladle used as application head applies heated wax to the lateral edges (7) of the filter medium (1).

## Revendications

1. Élément filtrant et adsorbant (5) composé d'un milieu filtrant (1) avec au moins deux couches de bandes filtrantes (2, 3) et d'une couche de particules d'adsorption (4) en grande partie bordée par les bandes filtrantes (2, 3), les bords latéraux ouverts (7) du milieu filtrant (1) avec les particules d'adsorption bordées (4) étant scellés au moyen d'une masse d'étanchéité (8), la masse d'étanchéité (8) étant une cire liquéfiable sous l'effet de chaleur et durcissable sous l'effet de refroidissement, et un cadre fixe (6) étant monté au moins aux bords latéraux, le cadre fixe (6) étant une pièce moulée par injection de matière plastique.

2. Élément filtrant et adsorbant selon la revendication 1, composé d'au moins deux couches de bandes filtrantes (2, 3) pliées en accordéon.

3. Élément filtrant et adsorbant selon l'une des revendications précédentes, **caractérisé en ce que** les particules d'adsorption (4) sont formées de particules de charbon actif.

4. Élément filtrant et adsorbant selon l'une des revendications précédentes, **caractérisé en ce que** les particules d'adsorption (4) sont formées d'échangeurs d'ions, en particulier de résines échangeuses d'ions.

5. Procédé de fabrication d'un élément filtrant et adsorbant selon l'une des revendications 2 à 4, **caractérisé en ce que** les couches de bandes filtrantes (2, 3) pliées en accordéon et coupées aux dimensions nécessaires sont maintenues avec la couche de particules d'adsorption bordée (4) dans un dispositif qui présente une tête applicatrice destinée à appliquer ou faire pénétrer la cire chauffée et que, après l'application ou la pénétration de la cire chauffée dans un dispositif de moulage par injection de matière plastique, le cadre (6) est injecté latéralement.

6. Procédé selon la revendication 5, **caractérisé en ce que** les bords latéraux (7) du milieu filtrant (1) sont revêtus de cire chaude de manière à ce qu'une louche servant de tête applicatrice applique de la cire chaude sur les bords latéraux (7) du milieu filtrant (1).
